# EUROPEAN PATENT APPLICATION

(11) **EP 1 662 271 A1**
(43) Date of publication of application: **31.05.2006**
(21) Application number: 05025777.3
(22) Date of filing: 25.11.2005
(51) Int. Cl.: G01S 1/00

(54) **Receiver, apparatus for generating corrected inverse spread code, and method of generating corrected inverse spread code**

(30) Priority: 30.11.2004 JP 2004345447
(71) Applicant: SEIKO EPSON CORPORATION, Shinjuku-ku, Tokyo 163-0811 (JP)
(72) Inventor: Muto, Nobuo, Suwa-shi, Nagano-ken 392-8502 (JP)
(74) Representative: HOFFMANN EITLE

(57) **Abstract**

A receiver that receives and demodulates a transmission signal modulated in a direct sequence spread spectrum and transmitted, the receiver including: a signal receiving unit that receives and acquires the transmission signal; a filter unit that removes a high-frequency component from the received signal; an A/D conversion unit that converts an output signal of the filter unit to generate a digital signal; an despread processing unit that multiplies the digital signal by an despread code to perform despread processing; and an despread-code supplying unit that generates the despread code on the basis of a corrected despread code generated by deforming a spread code included in the reception signal, which corresponds to a spread code deformed position that is a position where a signal subjected to Phase Shift Keying (PSK) modulation according to the spread code is markedly deformed, and supplies the despread code to the despread processing unit.

## Description

### BACKGROUND OF THE INVENTION

### 1. Technical Field

The present invention relates to a receiver, an apparatus for generating a corrected despread code, and a method of generating corrected despread code that perform despread processing using a corrected despread code generated by predicting deformation of a transmitted spread code in a receiver circuit.

### 2. Related Art

Communication by a direct sequence spread spectrum, which is one form of a spread spectrum system, has been widely used. Code Division Multiple Access (CDMA), which is a specific example of application of the direct sequence spread spectrum, is used in a cellular phone system, a Global Positioning System (GPS), and the like.

In the direct sequence spread spectrum, transmission data is multiplied by a spread code having a band much wider than that of transmission data, for example, Pseudo Noise (PN) to spread the transmission data to a wide band. On a reception side, it is possible to demodulate reception data by inversely spreading the reception data using a spread code identical with the spread code used on a transmission side to acquire desired data.

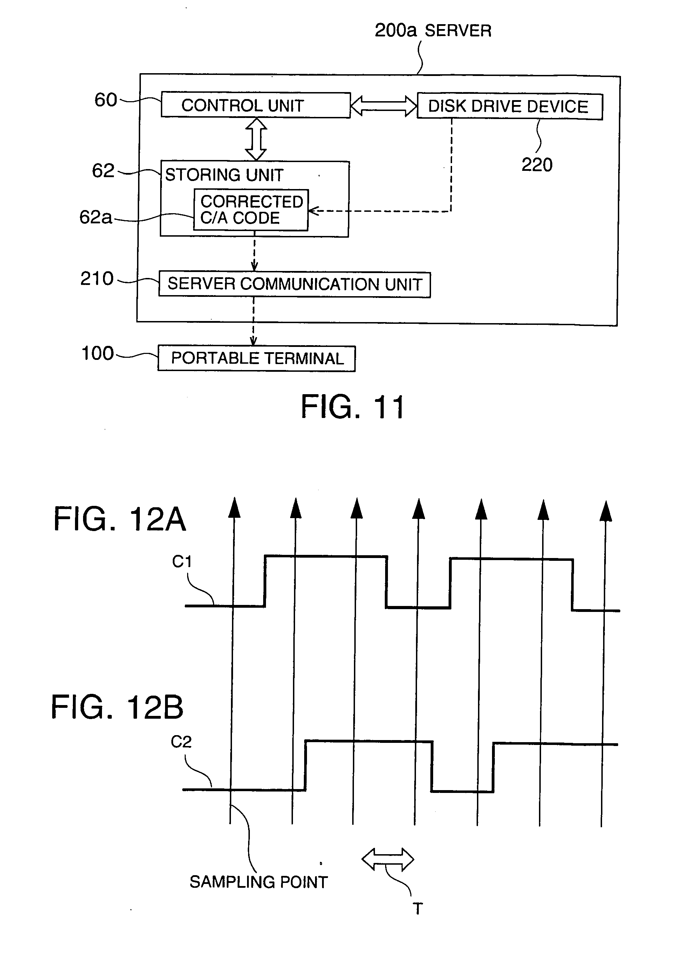

In order to perform despread, first, work for matching phases of the spread code on the transmission side and the spread code generated locally on the reception side is required. Fig. 12 is a conceptual diagram showing an example of a method of synchronizing signals. A signal C1 indicates a reception signal and a signal C2 indicates a spread code generated by a receiver. C1 and C2 are identical in a shape (an order of appearance of 0 and 1) and different in a phase. Sampling is applied to C1 and C2 are sampled at the same timing while a phase of C2 is changed (C2 is moved along a time axis T). For example, when a ratio of the number of sampling points, where values of C1 and C2 are identical, to the number of all sampling points becomes equal to or larger than a threshold value, it is judged that C1 and C2 are synchronized.

Time required for this synchronization significantly affects time until a received radio wave is demodulated and decoded to finally acquire necessary data. Thus, a large number of techniques for reducing the synchronizing time have been disclosed.

For example, JP-A-10-288658 (Fig. 3, etc.) discloses a constitution for reducing processing time by providing plural generators for PN codes and plural code comparators and processing plural PN codes with slightly different phases in parallel.

The code synchronizing operation and the demodulation and decoding of a reception signal described above are generally performed after processing such as filtering is applied to a reception signal inputted from an antenna rather than being applied to a high-frequency raw reception signal. In the reception signal after passing through a filter, a high-frequency component indicating a point of change of a spread code may be cut or a waveform may be deformed.

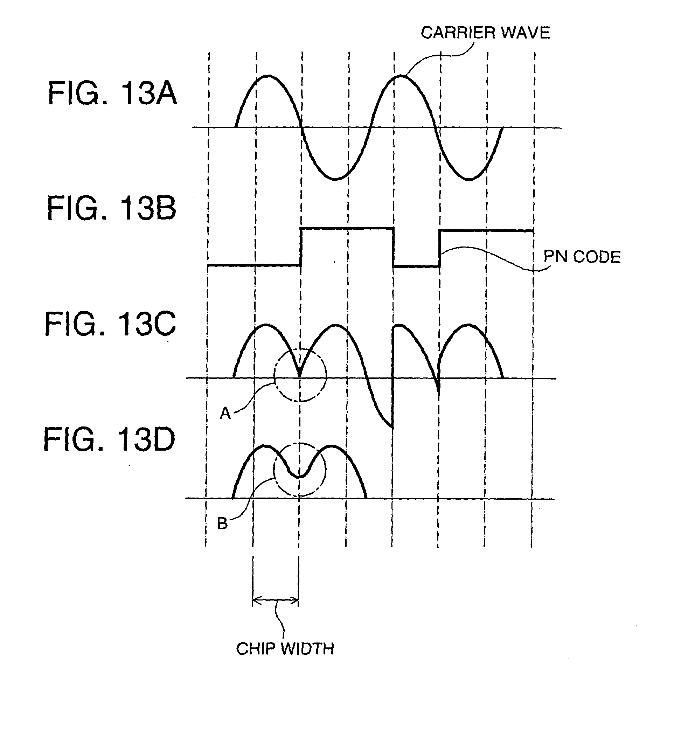

Fig. 13 is conceptual diagrams showing such deformation of a reception signal. (a) in Fig. 13 shows a carrier wave and (b) in Fig. 13 shows a spread code. When the carrier wave and the spread code are combined (multiplied), a waveform shown in (c) in Fig. 13 is obtained. When this combined wave passes through a filter, the combined wave may be deformed as shown in (d) in Fig. 13. For example, in some cases, a part showing a steep peak like an A part in (c) in Fig. 13 does not show a clear peak because a high-frequency component is cut as indicated by a B part in (d) in Fig. 13 after the combined wave passes through the filter.

Therefore, there is a problem in that, if a pattern identical with a pattern on a transmission side is used as a pattern of a local spread code used for synchronizing signals, parts of the patterns, where values of both the patterns should be identical originally, are judged as not identical, resulting in long synchronization time.

### SUMMARY

Therefore, an advantage of the invention is to provide a receiver, an apparatus for generating a corrected despread code, and a method of generating a corrected despread code that perform despread processing using a corrected despread code generated by predicting deformation of a transmitted spread code in a receiver circuit.

According to a first aspect of the invention, a receiver that receives and demodulates a transmission signal modulated in a direct sequence spread spectrum and transmitted is provided. The receiver includes: a signal receiving unit that receives the transmission signal and acquires a reception signal; a filter unit that removes a high-frequency component from the reception signal; an A/D conversion unit that converts an output signal of the filter unit to generate a digital signal; an despread processing unit that multiplies the digital signal by an despread code to perform despread processing; and an despread-code supplying unit that generates the despread code on the basis of a corrected despread code generated by deforming a spread code included in the reception signal, which corresponds to a spread code deformed position that is a position where a signal subjected to PSK (Phase Shift Keying) modulation according to the spread code is markedly deformed, and supplies the despread code to the despread processing unit.

According to the first aspect of the invention, the receiver has the signal receiving unit, the filter unit, the A/D conversion unit, the despread processing unit, and the despread-code supplying unit. Thus, the receiver can receive a signal modulated in the direct sequence spread spectrum and subject the signal to demodulation processing.

A component of a spread code included in a reception signal may be lost or deformed when the reception signal passes through the filter unit. However, the despread-code supplying unit provided in the receiver according to the first aspect of the invention predicts such deformation and generates an despread code on the basis of a corrected despread code obtained by correcting a spread code used on a transmission side. Thus, it is possible to finish synchronization of the two spread codes in a short time.

Therefore, in the receiver according to the first aspect of the invention, it is possible to reduce time required for demodulating a reception signal compared with the case in which a spread code identical with a spread code on the transmission side is used as an despread code.

Preferably, according to a second aspect of the invention, the despread-code supplying unit generates the despread code on the basis of a corrected despread code stored in a storage of the receiver.

According to the second aspect of the invention, a corrected despread code is stored in the storage provided in the receiver. Thus, it is unnecessary to add a special constitution for generating a corrected despread code in the receiver itself.

Therefore, for example, even in a small receiver such as a cellular phone, it is possible to perform prompt demodulation work that uses a corrected despread code.

According to a third aspect of the invention, the receiver includes a communication unit, and the receiver acquires the corrected despread code from an information providing apparatus, which is capable of communicating with the receiver, through a network and stores the corrected despread code in the storage.

According to the third aspect of the invention, since the receiver has the communication unit, the receiver can acquire a corrected despread code from an information providing apparatus through a network.

Therefore, when the corrected despread code is changed, the receiver can acquire a corrected despread code after the change immediately.

Preferably, according to a fourth aspect of the invention, the despread-code supplying unit is constituted by a circuit that outputs an despread code on the basis of a corrected despread code.

According to the fourth aspect of the invention, a C/A code supplying unit is constituted by a circuit, for example, an Integrated Circuit (IC) that outputs an despread code on the basis of a corrected despread code.

Since an despread code is generated by hardware, the receiver according to the fourth aspect of the invention can operate at high speed compared with the case in which an despread code is generated by a general purpose circuit and software.

Preferably, according to a fifth aspect of the invention, the transmission signal is a positioning signal transmitted from a Global Positioning System (GPS) satellite, and the corrected despread code is generated for each of GPS satellites in operation.

According to the fifth aspect of the invention, the corrected despread code is created in advance for each of the GPS satellites in operation.

Therefore, it is possible to reduce time required for acquiring a GPS satellite compared with the case in which a spread code (a C/A (Clear and Acquisition) code), which the GPS satellite uses for signal transmission, is used as an despread code directly.

In addition, since the corrected despread code is created by predicting deformation of a signal in the receiver to compensate for the deformation, it is also possible to reduce decoding errors. Therefore, it is possible to decode a navigation message included in a reception signal more accurately and improve positioning accuracy.

According to a sixth aspect of the invention, an apparatus for generating a corrected despread code, which generates an despread code used for demodulating a transmission signal modulated in a direct sequence spread spectrum and transmitted, is provided. The apparatus for generating a corrected despread code includes: a simulation signal generating unit that generates a simulation signal modulated by a spread code identical with that of the transmission signal; a filter unit that removes a high-frequency component from the simulation signal; a spread-code-deformed-position detecting unit that compares the simulation signal and the simulation signal after passing through the filter unit to detect a spread code deformed position that is a position where a signal subjected to PSK modulation according to a spread code included in the simulation signal is markedly deformed; and a corrected-despread-code generating unit that deforms the spread code corresponding to the spread code deformed position of the spread code to generate a corrected despread code.

According to the sixth aspect of the invention, since the apparatus for generating a corrected despread code has the simulation signal generating unit, the apparatus for generating a corrected despread code can generate a simulation signal modulated by a spread code identical with that on a transmission side.

In addition, since the apparatus for generating a corrected despread code also has the filter unit that removes a high-frequency component from the simulation signal, the apparatus for generating a corrected despread code can generate a signal obtained by removing a high-frequency component from the simulation signal. In the simulation signal after passing through this filter unit, a part where a signal subjected to PSK modulation according to a spread code is markedly deformed (a spread code deformed position) is caused when the high-frequency component is removed. The spread-code-deformed-position detecting unit compares the simulation signal and the simulation signal after passing through the filter unit to detect the spread code deformed position.

The corrected-despread-code generating unit corrects a spread code on the transmission side corresponding to the spread code deformed position to generate a corrected despread code.

Processing for causing a reception signal to pass through a filter is also performed in an actual receiver. Thus, deformation of a spread code occurs in the actual receiver in the same manner to be an obstacle to code synchronization.

However, according to the apparatus for generating a corrected despread code according to the sixth aspect of the invention, it is possible to predict deformation of a reception signal in a receiver to generate a corrected despread code compensating for the deformation and provide the receiver and an information providing apparatus with the corrected despread code.

According to a seventh aspect of the invention, a method of generating a corrected despread code used for receiving and demodulating a transmission signal modulated in a direct sequence spread spectrum and transmitted is provided. The method of generating a corrected despread code includes: generating a simulation signal modulated by a spread code identical with that of the transmission signal; removing a high-frequency component from the simulation signal; comparing the simulation signal and the simulation signal after undergoing the filtering to detect a spread code deformed position that is a position where a signal subjected to PSK modulation according to a spread code included in the simulation signal is markedly deformed; and deforming the spread code corresponding to the spread code deformed position of the spread code to generate a corrected despread code.

According to the seventh aspect of the invention, as in the sixth aspect of the invention, it is possible to generate a corrected despread signal and provide a receiver and the like with the corrected despread signal.

Preferably, according to an seventh aspect of the invention, the detection of a spread code deformed position is performed according to numerical analysis by a computer program.

According to the eighth aspect of the invention, the detection of a spread code deformed position is performed according to numerical analysis by a computer program.

Therefore, even when there are a large quantity of simulation signals, it is possible detect a spread code deformed position accurately and in a short time to generate a corrected despread signal.

Preferably, according to a ninth aspect of the invention, the detection of a spread code deformed position is performed by displaying a waveform of the simulation signal and a waveform of the simulation signal after undergoing the filtering on a display unit.

According to the ninth aspect of the invention, a waveform of the simulation signal and a waveform of the simulation signal after undergoing the filtering are displayed on the display unit. Thus, for example, a human views and compares the displayed waveforms to thereby detect a spread code deformed position.

As the display unit, it is possible to use a display connected to a computer, printing on a paper medium, and the like. Thus, it is possible to generate a corrected despread code at low cost.

Preferably, according to a tenth aspect of the invention, the transmission signal is a positioning signal transmitted from a GPS satellite, and the corrected despread code is generated for each of GPS satellites in operation.

According to the tenth aspect of the invention, it is possible to generate a corrected despread code for each of the GPS satellite in operation and provide a receiver with the corrected despread code.

### BRIEF DESCRIPTION OF THE DRAWINGS

The invention will be described with reference to the accompanying drawings, wherein like numbers reference like elements, and wherein:
Fig. 1 is a schematic diagram showing a GPS receiver and the like according to an embodiment of the invention;
Fig. 2 is a schematic diagram showing a main hardware configuration of the GPS receiver in Fig. 1;
Fig. 3 is a schematic diagram showing a main hardware configuration of a PC 50 in Fig. 1;
Fig. 4 is a schematic diagram showing a main hardware configuration of the GPS receiver in Fig. 1;
Fig. 5 is a schematic diagram showing a simulation signal before passing through a filter and a simulation signal after passing through the filter in comparison with each other;
Figs. 6A and 6B are schematic diagrams for explaining effects of a corrected despread code;
Fig. 7 is a flowchart of an example of operations of the GPS receiver in Fig. 1;
Fig. 8 is a schematic diagram showing a portable terminal and the like according to a third embodiment of the invention;
Fig. 9 is a schematic diagram showing a main hardware configuration of the portable terminal in Fig. 8;
Fig. 10 is a schematic diagram showing a main hardware configuration of a server in Fig. 8;
Fig. 11 is a schematic diagram showing a main hardware configuration of the server in Fig. 8;
Fig. 12 is a conceptual diagram showing an example of a method of synchronizing spread codes; and
Fig. 13 is a schematic diagram showing deformation of a reception signal.

### DESCRIPTION OF THE EMBODIMENTS

Preferred embodiments of the invention will be hereinafter explained in detail with reference to the attached drawings and the like.

Note that, since embodiments to be described below are preferred specific examples of the invention, technically preferable various limitations are attached to the embodiments. However, the scope of the invention is not limited to these forms unless there are descriptions specifically limiting the invention in the following explanation.

### (First embodiment)

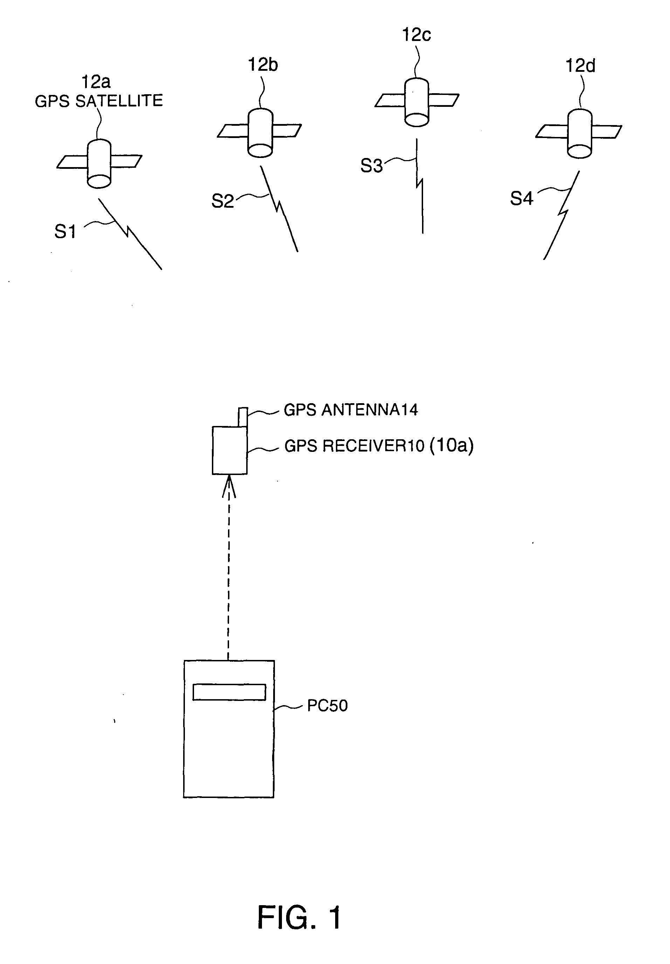

Fig. 1 is a schematic diagram showing a GPS receiver 10, which is an example of the receiver, and the like.

The GPS receiver 10 has a GPS antenna 14 that is an example of the signal receiving unit. The GPS receiver 10 receives positioning signals S1 to S4 transmitted from GPS satellites 12a to 12d. The signals S1 to S4 are signals in which a 50 Hz navigation message is spread and modulated using a spread code called a C/A code and carried on a carrier wave with a frequency of 1.575 GHz called an L1 band.

The GPS receiver 10 demodulates and decodes the received signals S1 to S4 to acquire the navigation message and calculates a present location of the GPS receiver 10 itself.

A Personal Computer (PC) 50 is an example of the apparatus for generating a corrected despread code. An despread code generated by the PC 50 is incorporated in the GPS receiver 10.

Note that the number of GPS satellites, which the GPS receiver 10 uses for positioning, is not limited to four shown in Fig. 1 and may be three or less or five or more.

### (A constitution of the GPS receiver 10)

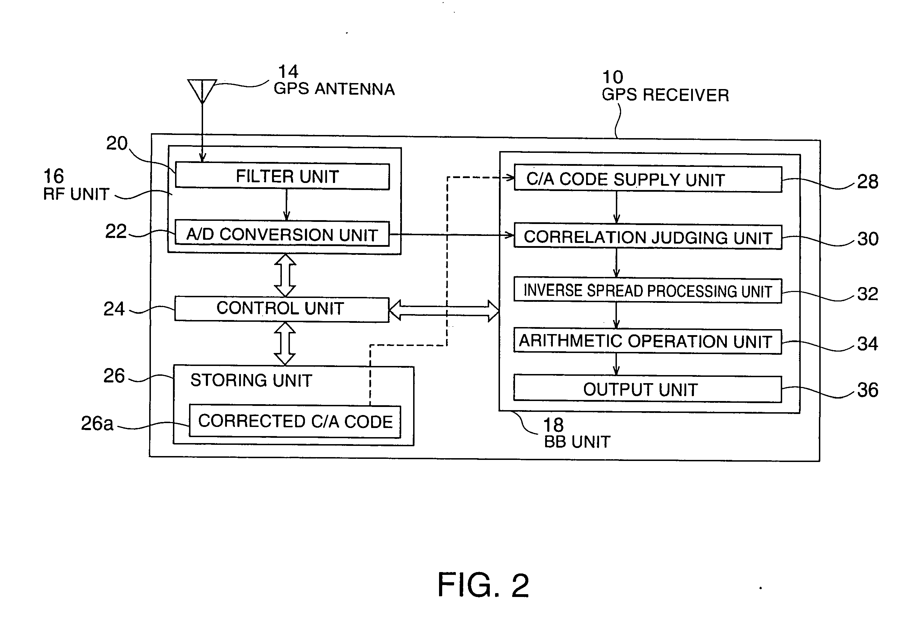

Fig. 2 is a schematic diagram showing a constitution of the GPS satellite 10. In the figure, solid line arrows indicate a flow of signals, a dotted line arrow indicates a flow of information, and void thick arrows indicate a flow of control.

The reception signals S1 and so forth received by the GPS antenna 14 are sent to a Radio Frequency (RF) unit 16. The reception signals sent to the RF unit 16 is processed into a form suitable for processing performed in a Base Band (BB) unit 18. In the BB unit 18, demodulation, decoding and the like of the signals are performed and, finally, the navigation message is acquired from the reception signals.

A filter unit 20, which is an example of the filter unit, cuts an unnecessary high-frequency component included in the reception signals.

An A/D conversion unit 22, which is an example of the A/D conversion unit, converts an analog signal outputted from the filter unit 20 into a digital signal and sends the digital signal to the BB unit 18.

A C/A code supply unit 28, which is an example of the despread-code supplying unit, generates a carrier wave having a frequency identical with that of a signal outputted from the A/D conversion unit. Subsequently, the C/A code supply unit 28 combines a corrected C/A code 26a stored in a storing unit 26 with the generated carrier wave to generate an despread code and supplies the despread code to a correlation judging unit 30.

Characteristics of the corrected C/A code 26a and a method of generating the same will be described later.

The correlation judging unit 30 judges correlation of a signal inputted from the A/D converting unit 22 and a signal inputted from the C/A code supply unit 28. As the judgment of correlation, the correlation judging unit 30 applies sampling to, for example, two input signals at the same timing and judges that the input signals are synchronized when a ratio of sampling points with identical values is equal to or higher than a fixed ratio.

When it is judged in the correlation judging unit 30 that the input signals are synchronized, the signals are outputted to an despread processing unit 32. When it is judged that the input signals are not synchronized, the correlation judging unit 30 shifts a phase of a signal outputted by the C/A code supply unit 28 and performs correlation judgment again.

The despread processing unit 32, which is an example of the despread processing unit, multiplies a signal outputted from the A/D converting unit 22 and a signal outputted from the C/A code supply unit 28 to demodulate reception signals. Further, the despread processing unit 32 decodes the signal after demodulation to acquire a navigation message. The acquired navigation message is stored in the storing unit 26 as required.

An arithmetic operation unit 34 calculates a present location of the GPS receiver 10 on the basis of the navigation message acquired by the despread processing unit 32. The output unit 36 outputs the calculated present location to, for example, a display device consisting of a liquid crystal display, as an image.

A control unit 24 is constituted by, for example, a microprocessor and controls operations of the entire GPS receiver 10. The control unit 24 executes an Operating System (OS) and an application program stored in the storing unit 26 and sends control signals to respective components of the RF unit 16 and the like to control the components.

The storing unit 26, which is an example of the storage, is constituted by, for example, a Random Access Memory (RAM). The corrected C/A code 26a (an example of the corrected despread code), which the C/A code supply unit 28 uses to generate a C/A code for despread, is stored in the storage unit 26. The corrected C/A code 26a does not always have to be generated by the GPS receiver 10. In this embodiment, a corrected C/A code generated by the PC (an example of the apparatus for generating an despread code) 50 described later is stored in the storing unit 26 via a recording medium such as a CD-ROM.

Although not shown in the figure, various programs that the control unit 24 executes, data that the arithmetic operation unit 34 uses for calculating a location, and the like are also stored in the storing unit 26.

The corrected C/A code 26a is information indicating a pattern (an order of arrangement of 0 and 1) over one cycle of a C/A code for all GPS satellites in operation. Since the C/A code consists of 1023 chips, the corrected C/A code 26a is represented by a binary integer of 1023 bits for one GPS satellite. Therefore, the corrected C/A code 26a is represented as, for example, an array of elements, each of which is an integer of 1023 bits and the number of which is equal to the number of GPS satellites in operation.

### (A constitution of the PC 50)

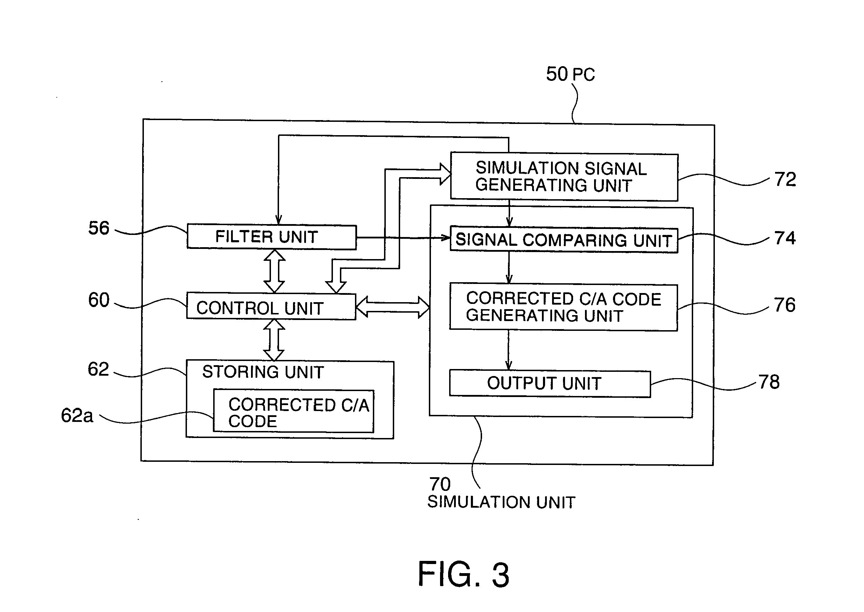

Fig. 3 is a schematic diagram showing a constitution of the PC 50 that is the example of the apparatus for generating an despread code.

As an outline of the constitution, a simulation signal generated by a simulation signal generating unit 72 and a simulation signal after passing through a filter unit 56 are compared in a simulation unit 70 to generate a corrected C/A code 62a.

The filter unit 56 removes a high-frequency component from a signal inputted from the simulation signal generating unit 72. The filter unit 56 is provided for the purpose of causing deformation in a simulation signal to search for a spread code deformed position. Thus, characteristics of the filter unit 56 are required to be identical with those of the filter unit 20 of the GPS receiver 10 to which a corrected C/A code is supplied.

The simulation signal generating unit 72, which is an example of the simulation signal generating unit, generates a simulation signal that is used for detecting a deformed part (a broken part) of a C/A code. Specifically, first, the simulation signal generating unit 72 generates a carrier wave of a frequency identical with an intermediate frequency adopted in a receiver to which a corrected C/A code is supplied. Then, the simulation signal generating unit 72 generates a simulation signal obtained by subjecting the carrier wave to Binary Phase Shift Keying (BPSK) modulation with a C/A code used by GPS satellites and outputs the simulation signal to the filter unit 56 and a signal comparing unit 74.

The signal comparing unit 74, which is an example of the spread-code-deformed-position detecting unit, compares a signal inputted from the simulation signal generating unit directly and a signal inputted through the filter unit 56 to detect a deformed part of the C/A code.

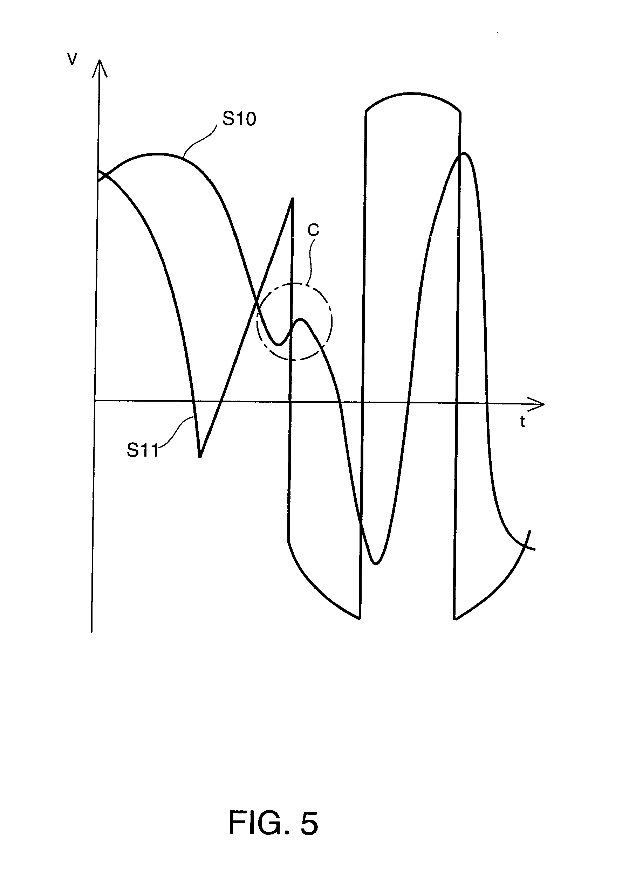

Fig. 5 is a schematic diagram in which parts of two input signals are extracted and shown. A signal S11 is a signal inputted from the simulation signal generating unit directly and a signal S10 is a signal that has passed through the filter unit 56. The "deformed part of the C/A code" is a part where a high-frequency component is cut when a signal passes through the filter unit 56 and a sharp peak, which should originally be present in a simulation signal, is lost as indicated by a C part encircled in Fig. 5.

The signal comparing unit 74 detects the deformed part of the C/A code according to, for example, numerical analysis by a computer program. When a position of the deformed part is, for example, at a tenth chip from the top of the C/A code, the signal comparing unit 74 outputs a numerical value "10" to the corrected C/A code generating unit 76.

It is also possible that a simulation signal and a simulation signal after passing through a filter are displayed on, for example, a display connected to the PC 50 as an image such that a human can visually recognize the simulation signals, and the human performs the detection of the deformed part of the C/A code by comparing two waveforms.

The corrected C/A code generating unit 76, which is an example of the corrected-despread-code generating unit, generates the corrected C/A code 62a on the basis of information indicating the deformed position of the C/A code inputted from the signal comparing unit 74. The corrected C/A code 62a is a code obtained by inverting a numeral of a chip position corresponding to a deformed position of a C/A code used on a transmission side. For example, when fourteen chips from the top of a C/A code of a certain GPS satellite are "01110001010011" and deformed parts of the C/A code are at second, third, and twelfth chips from the top, a corrected C/A code is "00010001010111".

The corrected C/A code generating unit 76 generates the corrected C/A code 62a over one cycle of the C/A code for all GPS satellites in operation and stores the corrected C/A code 62a in a storing unit 62.

The corrected C/A code 62a generated in this way is supplied to the GPS receiver 10 via a storage medium such as a Compact Disk-Recordable (CD-R).

It is also possible to attach a ROM writer to the PC 50, record a corrected C/A code in a ROM, and supply the corrected C/A code to the GPS receiver 10 or the like.

Since an intermediate frequency used by the receiver and a C/A code used on the transmission side are fixed, deformation of the C/A code does not occur irregularly but occurs in a specific part of one cycle of the C/A code. Therefore, in performing correlation judgment, it is possible to judge correlation correctly and reduce time required for synchronizing signals by using the corrected C/A code 62a as a signal for judgment rather than the C/A code itself used on the transmission side.

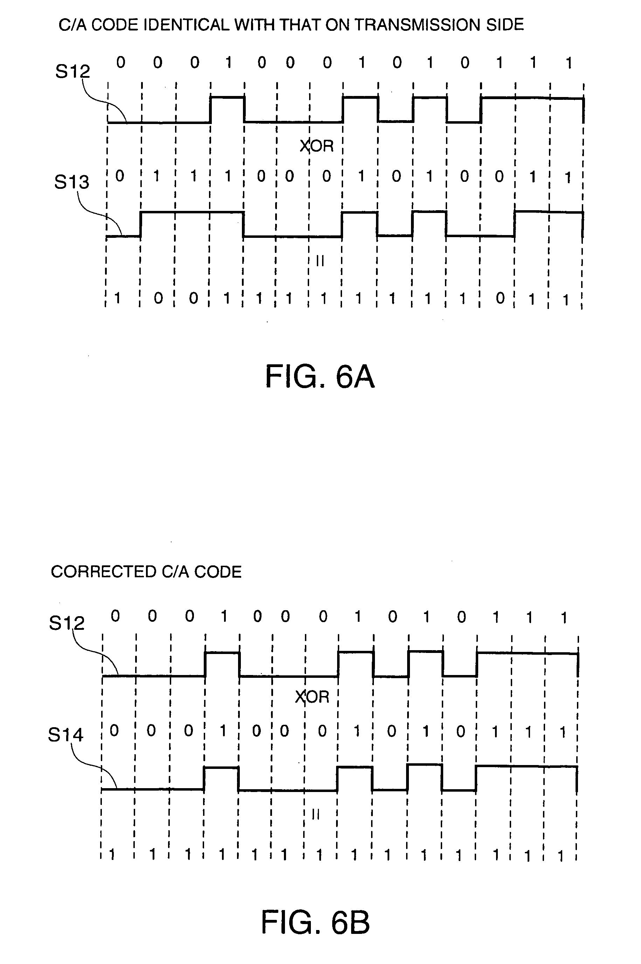

Figs. 6A and 6B are conceptual diagrams for explaining such effects. Figs. 6A and 6B show, in the example of the preceding paragraph, a difference between the case in which a C/A code identical with that on the transmission side is used in order to judge correlation and the case in which a corrected C/A code is used in order to judge correlation. A signal S12 is a C/A code that passes through a filter to be deformed, a signal S13 is a C/A code identical with that on the transmission side, and a signal S14 is a corrected C/A code.

Fig. 6A shows the case in which a C/A code identical with that on'the transmission side is used as a code for correlation judgment. There are chips in eleven parts where a reception signal and a code for judgment coincide with each other, which means that a rate of coincidence is 79% (11/14). If a rate of coincidence of 80% is used as a threshold value for judging whether the reception signal and the code for judgment are synchronized, it is judged that the reception signal and the code for judgment are not synchronized. The synchronization process is continued by, for example, shifting a phase of the code for judgment.

On the other hand, Fig. 6B shows the case in which a corrected C/A code is used. Since the corrected C/A code is created by predicting deformation due to passage of a reception signal through a filter, a rate of coincidence is 100%. It can be judged correctly that the two signals are synchronized. Thus, it is possible to finish the synchronization process and proceed to the next process.

### (An example of main operations of the PC 50)

The PC 50 according to this embodiment is constituted as described above. Next, an example of main operations and the like of the PC 50 will be explained.

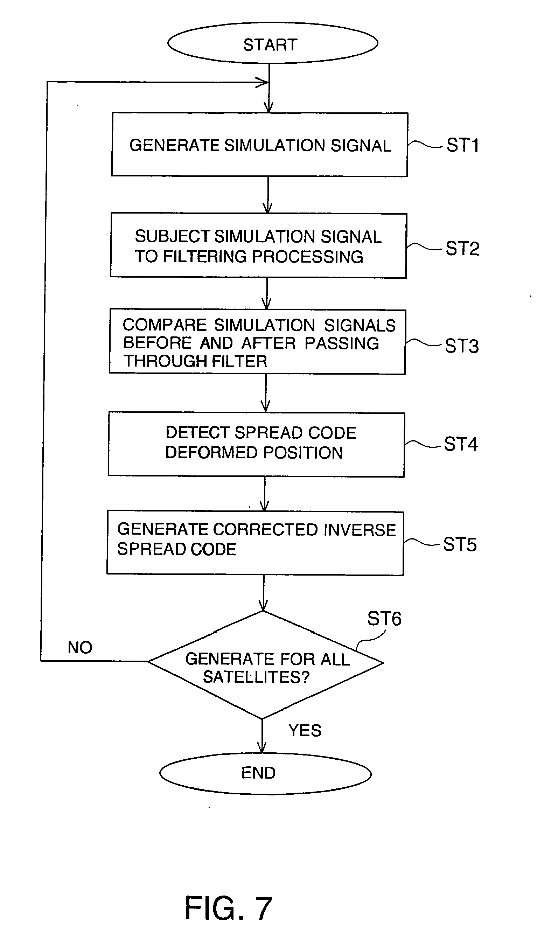

Fig. 7 is a schematic flowchart of an example of main operations of the PC 50.

The simulation signal generating unit 72 generates a simulation signal (ST1, an example of the generation of a simulation signal). The generated simulation signal is inputted to the filter unit 56 and the signal comparing unit 74.

The filter unit 56 removes an unnecessary high-frequency signal from the simulation signal inputted from the simulation signal generating unit 72 (ST2, an example of the filtering). The simulation signal, which has passed through the filter unit 56, is inputted to the signal comparing unit 74.

The simulation signal inputted from the simulation signal generating unit 72 directly and the simulation signal, which has passed through the filter unit 56, are inputted to the signal comparing unit 74, waveforms of the simulation signals are compared by the signal comparing unit 74 (ST3), and a spread code deformed position is detected (ST4, an example of the detection of a spread code deformed position).

The corrected C/A code generating unit 76 inverses a value of a spread code deformed position of a C/A code to generate the corrected C/A code 62a on the basis of the spread code deformed position detected in ST4 (ST5, an example of the generation of a corrected despread code). The corrected C/A code generating unit 76 stores the corrected C/A code 62a in the storing unit 62.

The PC 50 repeats the steps from ST1 to ST5, generates corrected C/A codes for all GPS satellites in operation, and stores the corrected C/A codes in the storing unit 62 (ST6).

A component of a C/A code included in a GPS signal may be lost or deformed when the GPS signal passes through the filter unit 20. However, the C/A code supply unit 28 of the GPS receiver 10 predicts such deformation and generates a C/A code for despread on the basis of the corrected C/A code 26a obtained by correcting a C/A code used on a transmission side. Thus, it is possible to finish acquisition of a GPS satellite in a short time.

Therefore, in the receiver 10 according to this embodiment, it is possible to reduce time required for demodulating a reception signal and calculating a location of the receiver 10 compared with the case in which a C/A code identical with that on the transmission side is used as an despread code.

In addition, since demodulation of a reception signal is performed using a corrected C/A code, it is also possible to reduce decoding errors and improve positioning accuracy.

### (Second embodiment)

### (A constitution of a GPS receiver 10a)

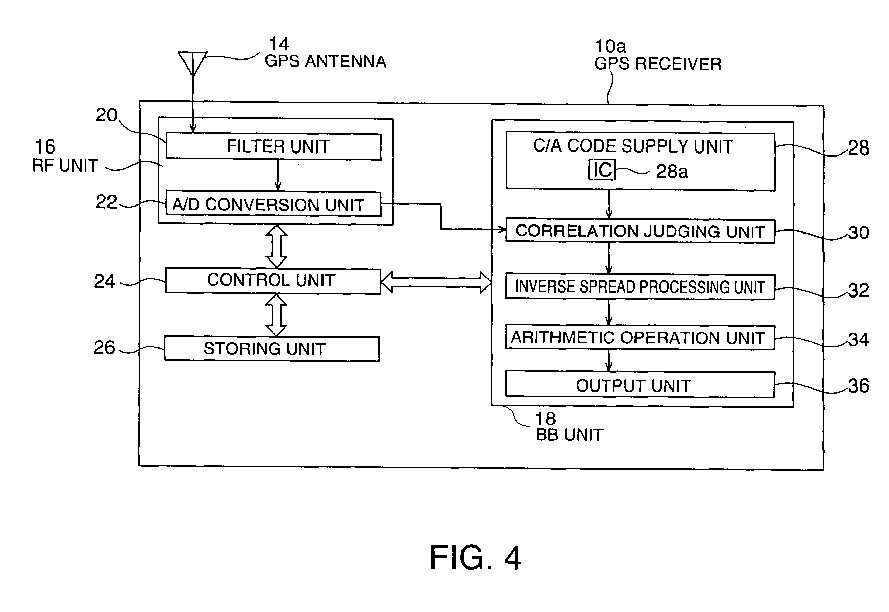

Fig. 4 is a schematic diagram showing a GPS receiver 10a that is a modification of the GPS receiver 10.

The GPS receiver 10a is different from the GPS receiver 10 in a method with which the C/A code supply unit 28 generates a corrected C/A code. In the GPS receiver 10a, an IC 28a (an example of the circuit) incorporated in the C/A code supply unit 28 is constituted such that the IC 28a can generate a corrected C/A code for an arbitrary GPS satellite in operation.

Since the GPS receiver 10a generates a corrected C/A code with hardware, the GPS receiver 10a can operate at high speed compared with the case in which a corrected C/A code is generated by software.

### (Third embodiment)

Next, a third embodiment of the invention will be explained. Components common to the first and the third embodiments are denoted by the identical reference numerals and signs, and explanations of the components are omitted.

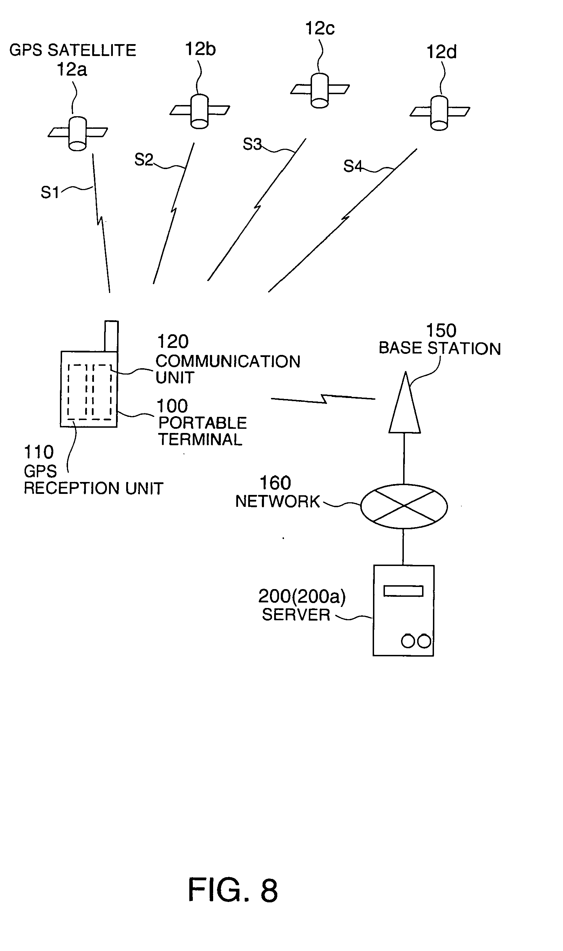

Fig. 8 is a schematic diagram showing a portable terminal 100, which is an example of the receiver and is a GPS receiver, and the like.

The portable terminal 100 has a GPS reception unit 110 and performs positioning using the signals S1 and so forth transmitted from the GPS satellites 12a and so forth.

The portable terminal 100 also has a communication unit 120 and performs communication with a server 200 through a base station 150 and a network 160 to acquire a corrected C/A code from the server 200.

### (A constitution of the portable terminal 100)

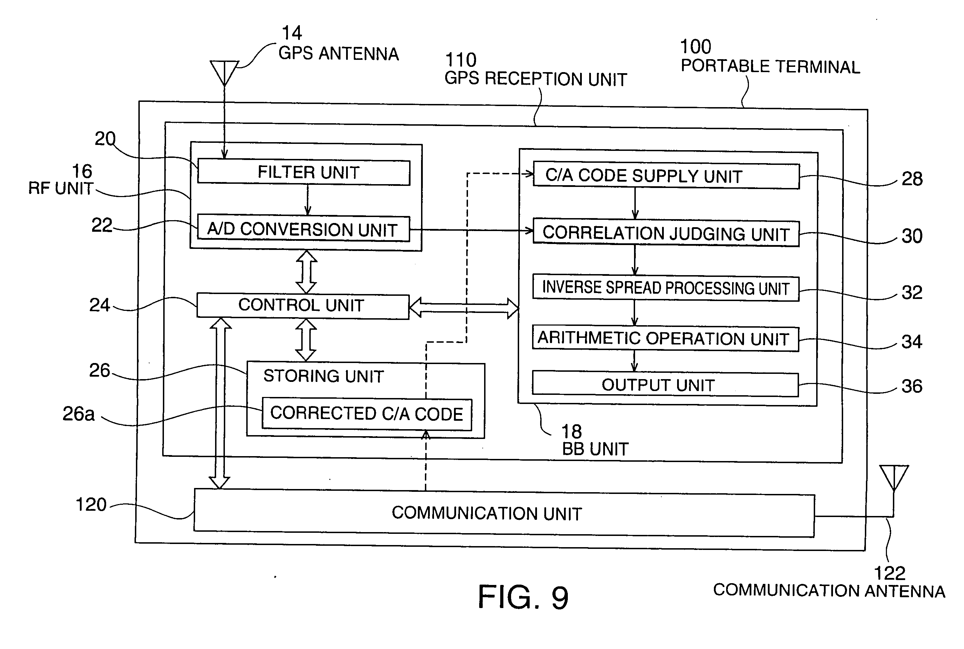

Fig. 9 is a schematic diagram showing a constitution of the portable terminal 100.

The portable terminal 100 has a GPS receiving unit 110 and a communication unit 120. The GPS receiving unit 110 includes the RF unit 16, the BB unit 18, the control unit 24, and the storing unit 26. Constitutions of respective units of the GPS receiving unit 110 are the same as those in the GPS receiver 10 in Fig. 2.

A communication unit 120, which is an example of the communication unit, is constituted by, for example, a cellular phone communication apparatus. The communication unit 120 can transmit and receive radio waves with a communication antenna 122 and make connection to the base station 150.

The portable terminal 100 acquires the corrected C/A code 26a from the server 200 using the communication unit 120 and stores the corrected C/A code 26a in the storing unit 26.

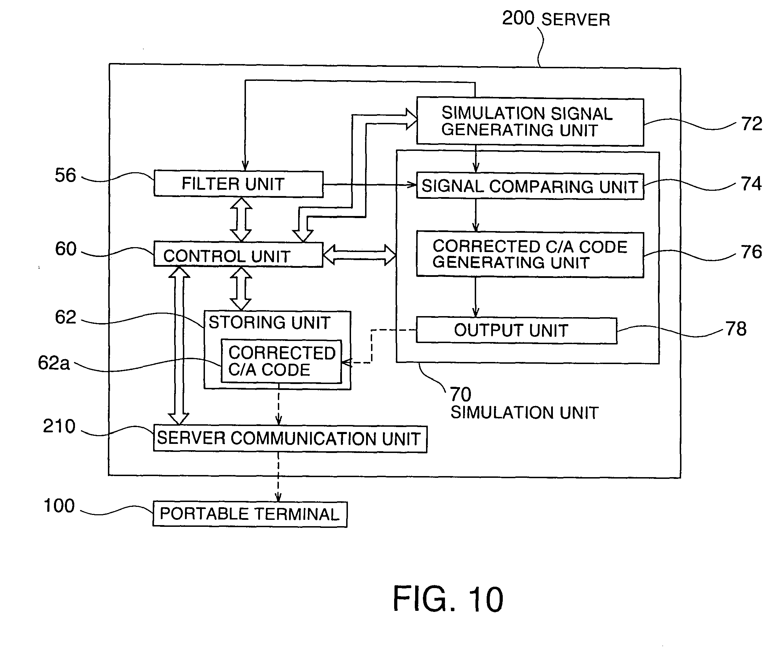

Fig. 10 is a schematic diagram showing a constitution of the server 200 that is an example of the information providing apparatus.

The server 200 is, for example, a File Transfer Protocol (FTP) server and includes the filter unit 56, the control unit 60, the storing unit 62, and the simulation unit 70. Constitutions and operations of these respective units are the same as those in the PC 50 in Fig. 3. In other words, the server 200 is an example of the information providing apparatus and an example of the apparatus for generating an despread code.

A server communication unit 210 is a communication interface that is constituted by, for example, an Ethernet adapter. In this embodiment, the server 200 can make wire connection to the base station 150 through the network 160.

The server 200 always waits for an information transfer request from a client such as the portable terminal 100. When an information transfer request is detected, the server 200 transmits the corrected C/A code 62a stored in the storing unit 62 to the portable terminal 100 through the server communication unit 210.

In this way, the corrected C/A code 62a is placed in the server 200 and managed unitarily. Thus, when the corrected C/A code is changed, it is possible to reflect the change on the portable terminal 100 promptly.

If the portable terminal 100 acquires only corrected C/A codes for several GPS satellites used for positioning from the server 200 every time the portable terminal 100 performs positioning, the portable terminal 100 is not required to hold corrected C/A codes for all GPS satellites. Therefore, it is possible to save a storage area.

Fig. 11 is a schematic diagram showing a constitution of a server 200a that is a modification of the server 200.

The server 200a does not have a function of generating a corrected C/A code. Therefore, the server 200a reads a corrected C/A code, which is generated by another apparatus, for example, the apparatus for generating an despread code such as the PC 50 in Fig. 3 and recorded on a recording medium such as a CD-R, with a disk drive device 220 and stores the corrected C/A code in the storing unit 62.

According to such a constitution, it is possible to provide the client such as the portable terminal 100 with the corrected C/A code 62a without adding a specific constitution to a general purpose server.

The invention is not limited to the embodiments described above. The embodiments may be combined with one another.

## Claims

1. A receiver that receives and demodulates a transmission signal modulated in a direct sequence spread spectrum and transmitted, the receiver comprising:
a signal receiving unit that receives the transmission signal and acquires a reception signal;
a filter unit that removes a high-frequency component from the reception signal;
an A/D conversion unit that converts an output signal of the filter unit to generate a digital signal;
an despread processing unit that multiplies the digital signal by an despread code to perform despread processing; and
an despread-code supplying unit that generates the despread code on the basis of a corrected despread code generated by deforming a spread code included in the reception signal, which corresponds to a spread code deformed position that is a position where a signal subjected to Phase Shift Keying (PSK) modulation according to the spread code is markedly deformed, and supplies the despread code to the despread processing unit.

2. A receiver according to claim 1, wherein the despread-code supplying unit generates the despread code on the basis of a corrected despread code stored in a storage of the receiver.

3. A receiver according to claim 2, further comprising a communication unit, wherein
the receiver acquires the corrected despread code from an information providing apparatus, which is capable of communicating with the receiver, through a network and stores the corrected despread code in the storage.

4. A receiver according to claim 1, wherein the despread-code supplying unit is constituted by a circuit that outputs an despread code on the basis of a corrected despread code.

5. A receiver according to claim 1, wherein the transmission signal is a positioning signal transmitted from a Global Positioning System (GPS) satellite, and the corrected despread code is generated for each of GPS satellites in operation.

6. An apparatus for generating a corrected despread code used for demodulating a transmission signal modulated in a direct sequence spread spectrum and transmitted, the apparatus for generating a corrected despread code comprising:
a simulation signal generating unit that generates a simulation signal modulated by a spread code identical with that of the transmission signal;
a filter unit that removes a high-frequency component from the simulation signal;
a spread-code-deformed-position detecting unit that compares the simulation signal and the simulation signal after passing through the filter unit to detect a spread code deformed position that is a position where a signal subjected to PSK modulation according to a spread code included in the simulation signal is markedly deformed; and
a corrected-despread-code generating unit that deforms the spread code corresponding to the spread code deformed position of the spread code to generate a corrected despread code.

7. A method of generating a corrected despread code used for receiving and demodulating a transmission signal modulated in a direct sequence spread spectrum and transmitted, the method of generating a corrected despread code comprising:
generating a simulation signal modulated by a spread code identical with that of the transmission signal;
removing a high-frequency component from the simulation signal;
comparing the simulation signal and the simulation signal after passing through the filter unit to detect a spread code deformed position that is a position where a signal subjected to PSK modulation according to a spread code included in the simulation signal is markedly deformed; and
deforming the spread code corresponding to the spread code deformed position of the spread code to generate a corrected despread code.

8. A method of generating a corrected despread code according to claim 7, wherein the detection of a spread code deformed position is performed according to numerical analysis by a computer program.

9. A method of generating a corrected despread code according to claim 7, wherein the detection of a spread code deformed position is performed by displaying a waveform of the simulation signal and a waveform of the simulation signal after passing through the filter unit on a display unit.

10. A method of generating a corrected despread code according to claim 7, wherein the transmission signal is a positioning signal transmitted from a GPS satellite, and the corrected despread code is generated for each of GPS satellites in operation.
